# EUROPEAN PATENT APPLICATION

(11) **EP 0 873 968 A1**
(43) Date of publication of application: **28.10.1998**
(21) Application number: 97909722.7
(22) Date of filing: 31.10.1997
(51) Int. Cl.: C01B 13/11

(54) **OZONE GENERATOR**

(30) Priority: 12.11.1996 JP 300631/96
(71) Applicant: NIPPON KAYAKU KABUSHIKI KAISHA, Tokyo 102 (JP)
(72) Inventor: KANEKO, Tadao, Tokyo 196 (JP); OGAWA, Masanobu, Gunma 375 (JP)
(74) Representative: Türk, Gille, Hrabal
(86) International application number: JP9703990
(87) International publication number: WO9821144

(57) **Abstract**

The present invention provides an ozone generator with a long life which produces ozone at a high concentration in a high yield.

The objective of the present invention is achieved by an ozone generator comprising a high-voltage electrode composed of a plurality of metal discs attached to a high-voltage electrode rod; a cylinder surrounding the high-voltage electrode and comprising dielectric materials; an external electrode surrounding the cylinder and comprising metal materials; a first space between the external electrode and the cylinder where oxygen passes; a first introducing route means to introduce oxygen from the outside to the space; a first removing route means to remove ozonized oxygen from the space to the outside; a means to apply high-frequency high voltage on the high-voltage electrode; and a means to ground the external electrode characterized in that the metal discs have been processed so as to have a plurality of slits on its periphery.

## Description

### [Technical Field]

The present invention relates to an ozone generator used for an ozonizer and more particularly to an ozone generator that ozonizes oxygen in a space to which oxygen is introduced using silent discharge by high-frequency high voltage.

### [Background Art]

Conventionally, the effects such as bacteriocidal, bleaching, and deodorant effects of ozone have been utilized in the fields of wastewater treatment, water purification, and sterilization washing.

In an ozonizer to ozonize oxygen, opposing electrodes for discharge are placed so as to sandwich a space to which oxygen is to be introduced and dielectrics, and silent discharge generated, when high-frequency high voltage is applied, between the electrodes for discharge is used to ozonize oxygen passing through the space, to which oxygen is introduced, between the electrodes for discharge.

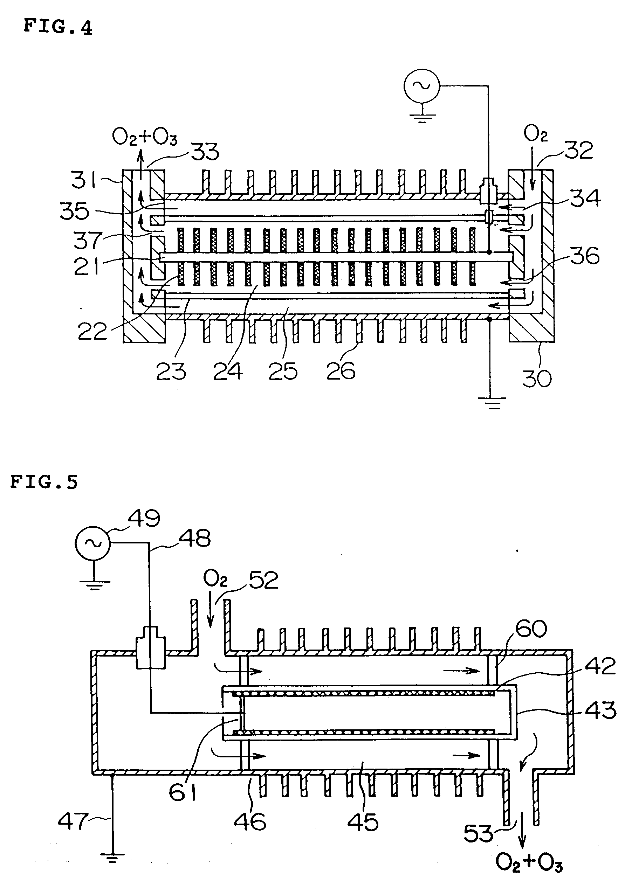

A conventional ozonizer, as shown, for example, in Figure 5, comprises a cylinder 43 comprising dielectric materials such as glass and ceramics; a high-voltage electrode 42 comprising a conductive coating coated on the inner surface of the cylinder 43 to which high-frequency high voltage is applied; an external electrode 46 placed outside the cylinder 43, comprising metal materials, and generally grounded; a space 45 between the external electrode 46 and the cylinder 43, where oxygen passes; a supporting member 60 retaining the space 45 between the external electrode 46 and the cylinder 43; an oxygen inlet 52 to introduce material gas, oxygen, from the outside; and an ozonized oxygen outlet 53 to remove ozonized oxygen to the outside.

High-frequency high voltage is supplied from a high-frequency high voltage power source 49 outside the ozone generator through a wiring 48 and a high-voltage supplying means 61 such as a feeder brush to the high-voltage electrode 42, while the external electrode 46 is grounded through a wiring 47. Radiating fins are provided on the periphery of the external electrode 46 for cooling.

Silent discharge is generated between the high-voltage electrode 42 to which high-frequency high voltage has been applied and the grounded external electrode 46. Oxygen is introduced from the outside of the ozonizer through the oxygen inlet 52, passes through the space 45 where silent discharge exists to be ozonized, and removed from the ozonized oxygen outlet 53 to the outside of the ozone generator.

Conventionally, the development of ozone generators that produce ozone at a high concentration in a high yield has been desired in order to reduce the size of ozonizers.

In addition, although the high-voltage electrode 42 is formed by coating conductive coating of silver alloys and gold alloys on the inner surface of the cylinder 43 comprising dielectric materials, the life of electrode materials for the high-voltage electrode 42 is short due to oxidation by ozone and evaporation by sputtering during silent discharge, since high-frequency high-voltage of the order of 10 kV is generally applied. Elongation of the life of the high-voltage electrode 42 has thus been also desired.

In order to obtain ozone at a high concentration in a high yield, when the amount of oxygen flow to be introduced is constant, a method to increase the amount of oxygen to be ozonized by increasing the area surface of the electrodes used for discharge and a method to increase ozone generation efficiency by reducing the temperature of an ozone generator have been available.

In the case of a conventional ozone generator shown in Figure 5, however, the surface area of the electrode used for discharge is that of the high-voltage electrode 42 coated on the cylinder 43 comprising dielectrics and the surface area of the high-voltage electrode 42 is determined by the diameter and length of the cylinder 43 comprising dielectric material used. It was thus impossible to increase surface area of the high-voltage electrode 42 in an ozone generator of a constant size. On the other hand, although the temperature of an ozone generator can be reduced by changing the structure of a radiating part to improve radiating efficiency for heat generated by discharge, a complexed structure of the radiating part to improve radiating efficiency prevents achievement of the purpose to reduce the size of ozonizers and results in an increase in price of apparatus. In other words, conventional ozone generators have limited the amount of ozone generated and could not produce ozone at a high concentration in a high yield.

In order to achieve life elongation of ozone generators, a configuration of a high-voltage electrode and electrode materials enabling elongation of life have been desired.

### [Disclosure of the Invention]

The object of the present invention is to solve the above problems. An ozone generator of the present invention has a configuration in which dielectrics and a high-voltage electrode are separated.

The ozone generator of the present invention comprises a high-voltage electrode composed of a plurality of metal discs attached to a high-voltage electrode rod; a cylinder surrounding the high-voltage electrode and comprising dielectric materials; an external electrode surrounding the cylinder and comprising metal materials; a first space between the external electrode and the cylinder where oxygen passes; a first introducing route means to introduce oxygen from the outside to the space; a first removing route means to remove ozonized oxygen from the space to the outside; a means to apply high-frequency high voltage on the high-voltage electrode; and a means to ground the external electrode, and is characterized in that the metal discs have been processed so as to have a plurality of slits on its periphery.

The configuration in which the high-voltage electrode is composed of a plurality of metal discs enables an increase in total surface area of the high-voltage electrode, even in an ozone generator with the same outside dimension, as compared with ozone generators with a conventional configuration, and as a result, enables an increase in the amount of oxygen to be ozonized.

Since metal discs can be used as materials of the high-voltage electrode instead of conventional ones formed by coating with conductive coat of silver alloys, gold alloys, etc., a high-voltage electrode with a long life can be obtained to allow achievement of life elongation of an ozone generator.

In addition, the metal discs are placed on the high-voltage electrode rod so as not to match the positions of concave and convex parts of a plurality of slits provided on the periphery of a metal disc to those of a neighboring metal disc. As a result, homogeneous silent discharge is generated in an axial direction of the high-voltage electrode rod to increase the amount of ozone generated and to further elongate the life of the high-voltage electrode.

Furthermore, by further providing a second space between the high-voltage electrode and the cylinder comprising dielectric materials where oxygen passes; a second introducing route means to introduce oxygen from the outside to the space; and a second removing route means to remove ozonized oxygen from the space to the outside, the amount of generated ozone could be further increased.

As metal disc materials, the use of tungsten has increased the efficiency of ozone generation, the use of titanium has elongated the life of high-voltage electrodes, and the use of stainless steel has enabled high-voltage electrode with well-balanced ozone generation efficiency, life-elongation, and processability.

### [Brief Description of Drawings]

Figure 1 is a cross-sectional view of an ozone generator according to the present invention;
Figure 2 is a plan view of a metal disc according to the present invention;
Figure 3 shows data of the amount of ozone generated by the number of concave and convex parts on the periphery of a metal disc when an ozone generator according to the present invention is employed;
Figure 4 shows another embodiment of the present invention; and
Figure 5 is a cross-sectional view of a conventional ozone generator.

### [Best Mode for Carrying Out the Invention]

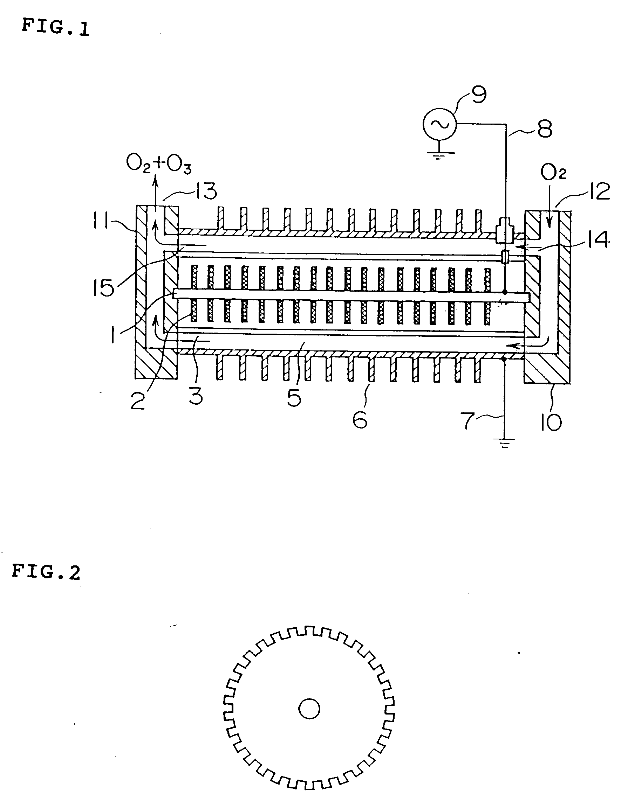

Figure 1 shows a cross-sectional view of the ozone generator according to the present invention.

In the ozone generator of Figure 1, a cylinder 3 comprising dielectric materials such as glass or ceramics, a high-voltage electrode rod 1 placed inside the cylinder 3 comprising dielectric materials, and an external electrode 6 comprising metal materials and placed outside the cylinder 3 comprising dielectric materialize are supported by pushing against an axis-holding members 10 and 11 provided on both ends by a pushing means (not shown) via a packing and the like.

An oxygen inlet 12 to introduce material gas, oxygen, from the outside of the ozone generator is provided to the axis-holding member 10 and an ozonized oxygen outlet 13 to remove ozonized oxygen to the outside of the ozone generator is provided to the axis-holding member 11. The first introducing route means 14 to lead introduced oxygen to the inside of the ozone generator is formed on the axis-holding member 10 and the first removing route means 15 to lead ozonized oxygen from the inside of the ozone generator to the ozonized oxygen outlet 13 is formed on the axis-holding member 11. Teflon resins are suitable as materials for the axis-holding members 10 and 11.

The embodiment shown in Figure 1 has such a configuration that oxygen introduced from the outside passes only through the first space 5 sandwiched between the cylinder 3 comprising dielectric materials and the external electrode 6.

The high-voltage electrode rod 1 preferably comprises metal materials and is connected to an outside high-frequency high-voltage power source 9 via a wiring 8. To the high-voltage electrode rod 1, a plurality of metal discs 2 is provided at optional intervals in a conductive state. A disc with a thickness of 0.5 mm and a diameter of 40 mm of metal materials such as tungsten, titanium, or stainless steel can be exemplified for metal discs 2, and several tens of discs are placed on the high-voltage electrode rod 1 at intervals of 4 mm.

The metal disc 2 is provided with a plurality of slits, as shown in Figure 2, on the periphery. For example, for a disc with a diameter of 40 mm, slits have a depth of 2 mm, a top width of convex parts of 3 mm, and a base width of concave parts of about 2 mm. Several tens of, for example, about 20-40 concave and convex parts are provided. Although the shape of the convex parts is rectangular in an example shown in Figure 2, it is not restricted to rectangular, and may be of any other shapes such as triangle, polygonal, circular arc, and needle-like shape.

The external electrode 6 comprises metal materials such as stainless steel, is grounded via the wiring 7, and is provided with radiating fins on the periphery for cooling.

Oxygen is introduced from the outside of the ozone generator through the oxygen inlet 12 and led to the first space 5 through the first introducing route means 14 in the axis-holding member 10. In the first space 5, silent discharge is generated from the metal discs 2 to which high-frequency high voltage is supplied from the outside high-frequency high-voltage power source 9 through the wiring 8 and the high-voltage electrode rod 1 and the external electrode 6 grounded via the wiring 7. Introduced oxygen is ozonized by passing through the first space 5. Oxygen thus ozonized is removed through the first removing route measure 15 inside the axis-holding members 11 and then through the ozonized oxygen outlet 13 to the outside of the ozone generator.

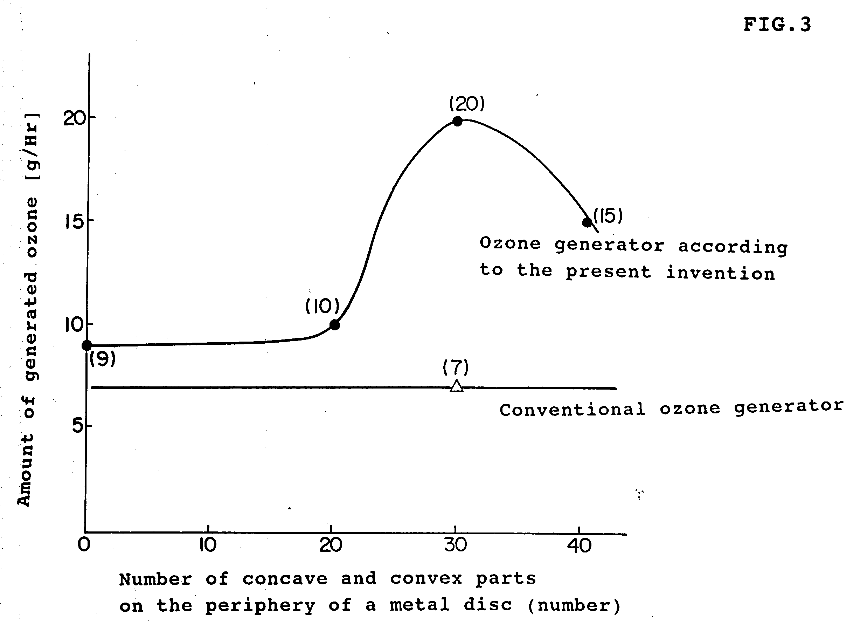

Figure 3 shows the number of slits on the periphery of the metal disc 2 and the results of measurement of the amount of ozone generated when the ozone generator according to the present invention is used.

The outside high-frequency high-voltage power source used here is that with output power 10 KV and output current of 30 mA. The flow rate of oxygen introduced to the inside of the ozone generator from the outside through the oxygen inlet 12 is 2 L/min. The length of the ozone generator is 200 mm and the extent of the metal discs attached to the high-voltage electrode rod 1 is 150 mm. The distance of the first space 5 from the cylinder 3 comprising dielectric material to the external electrode 6 where oxygen passes is 1 mm. There are 32 metal discs.

In Figure 3, the data for the conventional ozone generator were obtained under the same conditions as the ozone generator according to the present invention for output power of high-frequency high voltage, oxygen flow, and others, and the amount of ozone generated was 7 [g/Hr]. The data for the ozone generator according to the present invention exhibit those for the numbers of concave and convex parts on the periphery formed by slit processing, 0, 20, 30, and 40. The amounts of ozone generated were 9, 10, 20, and 15 [g/Hr], respectively. Both the depth and width of a concave part formed by slitting were 2 mm, which were common for both cases. The number of concave and convex parts by slitting processing was 0 for a disc with a diameter of 40 mm with no slit.

From the results of measurement shown in Figure 3, it is shown that the amount of generated ozone is largest, when the number of concave and convex parts provided on the periphery of the metal disc 2 by slit processing is 30. It is therefore found that about 3 times larger amount of ozone can be produced as compared with the conventional ozone generator.

In addition, the use of discs of metals such as tungsten, titanium, and stainless steel with a thickness of about 0.5 mm as a high-voltage electrode enables achievement of life elongation of a high-voltage electrode as compared with the conventional ozone generators.

Another embodiment of the present invention is shown in Figure 4.

In this embodiment, in addition to the first space 25 sandwiched between a cylinder 23 comprising dielectric materials and an external electrode 26, the second space 24 sandwiched between the cylinder 23 comprising dielectric materials and a high-voltage electrode 22 comprising a high-voltage electrode rod 21 and metal discs are also employed as a space where oxygen passes to enable a further increase in the amount of generated ozone. The first introducing route means 34 to lead oxygen from the oxygen inlet 32 to the first space 25 and the second introducing route means 36 to lead oxygen to the second space 24 are formed on an axis-holding member 30. The first removing route means 35 to lead ozonized oxygen from the first space 25 to an ozonized oxygen outlet 33 and the second introducing route means 37 to lead ozonized oxygen from the second space 24 to an ozonized oxygen outlet 33 are formed on an axis-holding member 31. Other constituents are the same as those in the embodiment of Figure 1.

According to the present invention, the amount of oxygen to be ozonized can be increased, ozone can be produced at a high concentration in a high yield, and an ozone generator achieving life elongation thereof can be provided. In addition, due to the easiness of manufacturing, ozone generators enabling an increase or a decrease in size of the ozone generators can be provided.

## Claims

1. An ozone generator comprising a high-voltage electrode composed of a plurality of metal discs attached to a high-voltage electrode rod; a cylinder surrounding the high-voltage electrode and comprising dielectric materials; an external electrode surrounding the cylinder and comprising metal materials; a first space between the external electrode and the cylinder where oxygen passes; a first introducing route means to introduce oxygen from the outside to the space; a first removing route means to remove ozonized oxygen from the space to the outside; a means to apply high-frequency high voltage on the high-voltage electrode; and a means to ground the external electrode characterized in that the metal discs have been processed so as to have a plurality of slits on its periphery.

2. The ozone generator according to Claim 1, wherein the positions of the concave and convex parts of a plurality of slits provided on the periphery of a metal disc are placed so as not to match those of concave and convex parts of a plurality of slits provided on the periphery of a neighboring metal disc.

3. The ozone generator according to Claim 1 or 2, wherein a second space between the high-voltage electrode and the cylinder comprising the dielectric materials where oxygen passes; a second introducing route means to introduce oxygen to the space from the outside; and a second removing route means to remove ozonized oxygen from the space to the outside are further provided.

4. The ozone generator according to any one of Claims 1-3, wherein the materials of the metal discs are tungsten, titanium, or stainless steel.
